# EUROPEAN PATENT APPLICATION

(11) **EP 4 530 988 A1**
(43) Date of publication of application: **02.04.2025**
(21) Application number: 24202249.9
(22) Date of filing: 24.09.2024
(51) Int. Cl.: G06T 11/60

(54) **TEXT TO IMAGE CHANGER**

(30) Priority: 26.09.2023 US 202363585517 P; 26.09.2023 US 202363585476 P; 26.09.2023 US 202363585533 P; 11.09.2024 US 202418882458
(71) Applicant: Meta Platforms, Inc., Menlo Park, CA 94025 (US)
(72) Inventor: Shapira, Lior, Menlo Park (US); Mahajan, Dhruv Kumar, Menlo Park (US); Hefny, Tarek, Menlo Park (US); Zhang, Ning, Menlo Park (US); Pandey, Vivek Satyadeo, Menlo Park (US); Ghosh, Prithvi, Menlo Park (US); Chen, Junshen Kevin, Menlo Park (US); Corby, Karen, Menlo Park (US); Leal, Melissa, Menlo Park (US); Chen, Shengzhe, Menlo Park (US); de Sousa, Marco Andre Lourenço, Menlo Park (US); Kupasrimonkol, Sirisak Mark, Menlo Park (US); Zhao, Wenliang, Menlo Park (US); Fan, Zhipeng, Menlo Park (US); Tyson, Michael, Menlo Park (US)
(74) Representative: Murgitroyd & Company

(57) **Abstract**

The application describes method of modifying an image. The method may include a step of receiving, via an user interface of a service, a reference image and an input including text associated with the reference image. The method may also include a step of determining, via a trained machine learning (ML) model, one or more features of the reference image. The method may further include a step of modifying, via one or more trained latent diffusion models (LDMs), the reference image based upon the determined features and the received input. Any one or more of a background of the reference image, an area of the reference image or a style of the reference image may be modified. The method may even further include a step of causing to display, via the user interface of the service, the modified image.

## Description

### TECHNOLOGICAL FIELD

The present application generally relates to methods, systems and computer program products using artificial intelligence (Al) to modify an image.

### BACKGROUND

Text-to-image models include advanced artificial intelligence (Al) systems designed to generate visual content from textual descriptions. The field of text-to-image generation has seen significant advancements with the introduction of deep learning techniques. Latent diffusion models (LDMs) have emerged as a powerful tool for generating high-quality images from textual descriptions, enabling a wide range of applications in digital art, design, and entertainment. These models leverage the capabilities of neural networks to understand and manipulate visual and textual data, creating images that closely align with given text prompts.

However, maintaining the identity of a subject in a reference image and a realistic output while incorporating textual prompts remains a challenge. In addition, ensuring privacy of a subject in the modified image also remains a challenge.

### SUMMARY

The subject technology is directed to an architecture for generating a modified image. The technology strikes a balance between preserving the identity of a subject, following complex text prompts and maintaining visual quality.

According to a first aspect, there is provided a method comprising: receiving, via a user interface of a service, a reference image and an input comprising text associated with the reference image, wherein the reference image comprises any one or more of an object or a person; determining, via a trained machine learning (ML) model, one or more features of the reference image; modifying, via one or more trained latent diffusion models (LDMs), the reference image based upon the determined features and the received input, wherein any one or more of a background of the reference image, an area of the reference image or a style of the reference image are modified; and causing to display, via the user interface of the service, the modified image.

The input may comprise a mask of an area in the image.

The method may further comprise transmitting prior to receiving the input, via the user interface, any one or more of a suggestion of a mask of the area in the image or a suggestion affecting the background or the style of the reference image.

An identity of the object or the person may be preserved.

The method may further comprise: detecting whether a resolution of the reference image exceeds a capacity of the LDMs; determining a section of the reference image being preserved; and editing a zoomed-in section of the reference image being preserved and pasting the edited section into the reference image.

The method may further comprise assessing, via a privacy LDM, whether any one or more of the reference image, received input or the modified image meets predetermined criteria prior to the reference image being displayed on the user interface of the service.

The predetermined criteria may comprise any one or more of violence, profanity or nudity.

The method may further comprise: transmitting, via the user interface based upon the assessment, a request to update any one or more of the reference image or the received input; and receiving, via the user interface, any one or more of an updated reference image or an updated input.

According to a second aspect, there is provided a system comprising: a memory with instructions stored thereon; and a processor operably coupled to the memory and configured to execute the method of the first aspect. The memory may be non-transitory.

According to a third aspect, there is provided a computer readable medium comprising program instructions stored thereon which, when executed by a processor, cause the processor to carry out the method of the first aspect.

According to a fourth aspect, there is provided a computer program product comprising instructions which, when the program is executed by a computer, cause the computer to carry out the method of the first aspect.

Additional advantages will be set forth in part in the description that follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### BRIEF DESCRIPTION OF THE DRAWINGS

The summary, as well as the following detailed description, is further understood when read in conjunction with the appended drawings. For the purpose of illustrating the disclosed subject matter, examples of the disclosed subject matter are shown in the drawings; however, the disclosed subject matter is not limited to the specific methods, compositions, and devices disclosed. In addition, the drawings are not necessarily drawn to scale. In the drawings:
FIG. 1 illustrates a diagram of an exemplary network environment in accordance with one or more example aspects of the subject technology.
FIG. 2 illustrates a diagram of an exemplary communication device in accordance with one or more example aspects of the subject technology.
FIG. 3 illustrates an exemplary computing system in accordance with one or more example aspects of the subject technology.
FIG. 4 illustrates a machine learning and training model framework in accordance with example aspects of the present disclosure.
FIG. 5 illustrates a system for generating a modified image in accordance with one or more example aspects of the subject technology.
FIG. 6 illustrates a modification to a style of an image via a restyle model in accordance with one or more example aspects of the subject technology.
FIG. 7A illustrates a modification to a background of an image via a background model in accordance with one or more example aspects the subject technology.
FIG. 7B illustrates another modification of an image via a background model in accordance with one or more example aspects of the subject technology.
FIG. 8 illustrates a flowchart of an example process of the subject technology.

The figures depict various examples for purposes of illustration only. One skilled in the art will readily recognize from the following discussion that alternative examples of the structures and methods illustrated herein may be employed without departing from the principles described herein.

### DETAILED DESCRIPTION

Some examples of the subject technology will now be described more fully hereinafter with reference to the accompanying drawings, in which some, but not all examples of the subject technology are shown. Indeed, various examples of the subject technology may be embodied in many different forms and should not be construed as limited to the examples set forth herein. Like reference numerals refer to like elements throughout.

As used herein, the terms "data," "content," "information," and similar terms may be used interchangeably to refer to data capable of being transmitted, received and/or stored in accordance with examples of the disclosure. Moreover, the term "exemplary," as used herein, is not provided to convey any qualitative assessment, but instead merely to convey an illustration of an example. Thus, use of any such terms should not be taken to limit the spirit and scope of examples of the disclosure.

As defined herein, a "computer-readable storage medium," which refers to a non-transitory, physical or tangible storage medium (e.g., volatile or non-volatile memory device), may be differentiated from a "computer-readable transmission medium," which refers to an electromagnetic signal.

As referred to herein, an "application" may refer to a computer software package that may perform specific functions for users and/or, in some cases, for another application(s). An application(s) may utilize an operating system (OS) and other supporting programs to function. In some examples, an application(s) may request one or more services from, and communicate with, other entities via an application programming interface (API).

As referred to herein, a Metaverse may denote an immersive virtual space or world in which devices may be utilized in a network in which there may, but need not, be one or more social connections among users in the network or with an environment in the virtual space or world. A Metaverse or Metaverse network may be associated with three-dimensional (3D) virtual worlds, online games (e.g., video games), one or more content items such as, for example, images, videos, non-fungible tokens (NFTs) and in which the content items may, for example, be purchased with digital currencies (e.g., cryptocurrencies) and other suitable currencies. In some examples, a Metaverse or Metaverse network may enable the generation and provision of immersive virtual spaces in which remote users may socialize, collaborate, learn, shop and/or engage in various other activities within the virtual spaces, including through the use of augmented/virtual/mixed reality.

As referred to herein, a resource(s), or an external resource(s) may refer to any entity or source that may be accessed by a program or system that may be running, executed or implemented on a communication device and/or a network. Some examples of resources may include, but are not limited to, Hypertext Markup Language (HTML) pages, web pages, images, videos, scripts, stylesheets, other types of files (e.g., multimedia files) that may be accessible via a network (e.g., the Internet) as well as other files that may be locally stored and/or accessed by communication devices.

It is to be understood that the methods and systems described herein are not limited to specific methods, specific components, or to particular implementations. It is also to be understood that the terminology used herein is for the purpose of describing particular examples only and is not intended to be limiting.

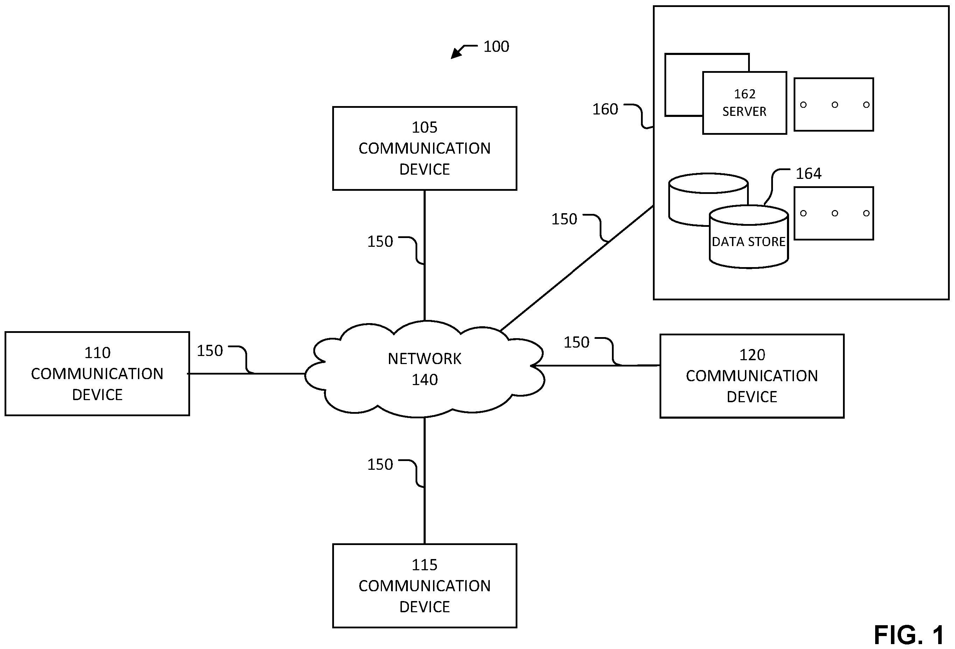

Reference is now made to FIG. 1, which is a block diagram of a system. As shown in FIG. 1, the system 100 may include one or more communication devices 105, 110, 115 and 120 and a network device 160. Additionally, the system 100 may include any suitable network such as, for example, network 140. In some examples, the network 140. In other examples, the network 140 may be any suitable network capable of provisioning content and/or facilitating communications among entities within, or associated with the network 140. As an example and not by way of limitation, one or more portions of network 140 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 140 may include one or more networks 140.

Links 150 may connect the communication devices 105, 110, 115 and 120 to network 140, network device 160 and/or to each other. This disclosure contemplates any suitable links 150. In some examples, one or more links 150 may include one or more wired and/or wireless links, such as, for example, Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH). In some examples, one or more links 150 may each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 150, or a combination of two or more such links 150. Links 150 need not necessarily be the same throughout system 100. One or more first links 150 may differ in one or more respects from one or more second links 150.

In some examples, communication devices 105, 110, 115, 120 may be electronic devices including hardware, software, or embedded logic components or a combination of two or more such components and capable of carrying out the appropriate functionalities implemented or supported by the communication devices 105, 110, 115, 120. As an example, and not by way of limitation, the communication devices 105, 110, 115, 120 may be a computer system such as, for example, a desktop computer, notebook or laptop computer, netbook, a tablet computer (e.g., a smart tablet), e-book reader, Global Positioning System (GPS) device, camera, personal digital assistant (PDA), handheld electronic device, cellular telephone, smartphone, smart glasses, augmented/virtual reality device, smart watches, charging case, or any other suitable electronic device, or any suitable combination thereof. The communication devices 105, 110, 115, 120 may enable one or more users to access network 140. The communication devices 105, 110, 115, 120 may enable a user(s) to communicate with other users at other communication devices 105, 110, 115, 120.

Network device 160 may be accessed by the other components of system 100 either directly or via network 140. As an example and not by way of limitation, communication devices 105, 110, 115, 120 may access network device 160 using a web browser or a native application associated with network device 160 (e.g., a mobile social-networking application, a messaging application, another suitable application, or any combination thereof) either directly or via network 140. In particular examples, network device 160 may include one or more servers 162. Each server 162 may be a unitary server or a distributed server spanning multiple computers or multiple datacenters. Servers 162 may be of various types, such as, for example and without limitation, web server, news server, mail server, message server, advertising server, file server, application server, exchange server, database server, proxy server, another server suitable for performing functions or processes described herein, or any combination thereof. In particular examples, each server 162 may include hardware, software, or embedded logic components or a combination of two or more such components for carrying out the appropriate functionalities implemented and/or supported by server 162. In particular examples, network device 160 may include one or more data stores 164. Data stores 164 may be used to store various types of information. In particular examples, the information stored in data stores 164 may be organized according to specific data structures. In particular examples, each data store 164 may be a relational, columnar, correlation, or other suitable database. Although this disclosure describes or illustrates particular types of databases, this disclosure contemplates any suitable types of databases. Particular examples may provide interfaces that enable communication devices 105, 110, 115, 120 and/or another system (e.g., a third-party system) to manage, retrieve, modify, add, or delete, the information stored in data store 164.

Network device 160 may provide users of the system 100 the ability to communicate and interact with other users. In particular examples, network device 160 may provide users with the ability to take actions on various types of items or objects, supported by network device 160. In particular examples, network device 160 may be capable of linking a variety of entities. As an example and not by way of limitation, network device 160 may enable users to interact with each other as well as receive content from other systems (e.g., third-party systems) or other entities, or allow users to interact with these entities through an application programming interfaces (API) or other communication channels.

It should be pointed out that although FIG. 1 shows one network device 160 and four communication devices 105, 110, 115 and 120, any suitable number of network devices 160 and communication devices 105, 110, 115 and 120 may be part of the system of FIG. 1 without departing from the spirit and scope of the present disclosure.

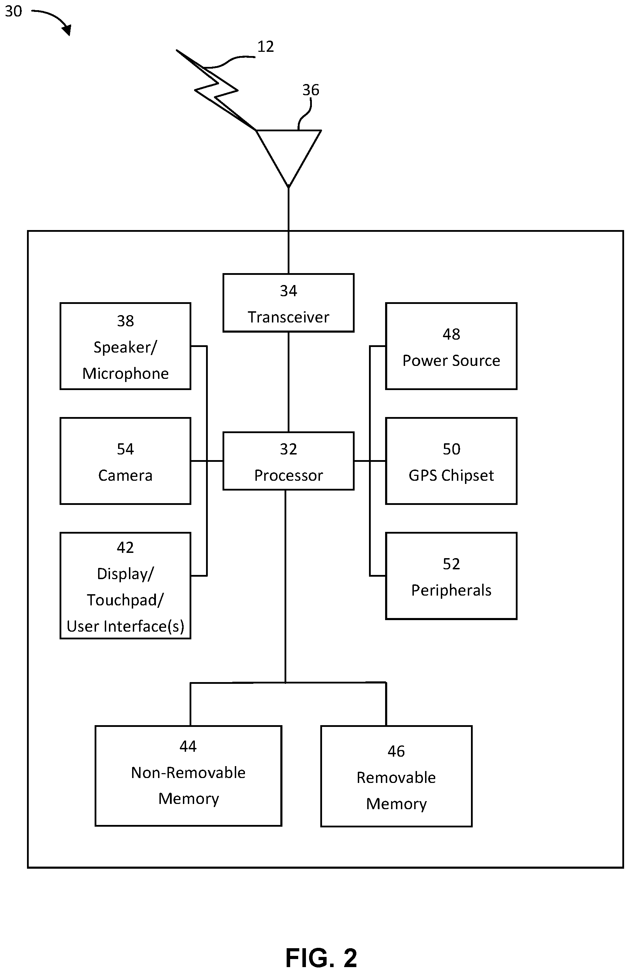

FIG. 2 illustrates a block diagram of an exemplary hardware/software architecture of a communication device such as, for example, user equipment (UE) 30. In some exemplary respects, the UE 30 may be any of communication devices 105, 110, 115, 120. In some exemplary aspects, the UE 30 may be a computer system such as, for example, a desktop computer, notebook or laptop computer, netbook, a tablet computer (e.g., a smart tablet), e-book reader, GPS device, camera, personal digital assistant, handheld electronic device, cellular telephone, smartphone, smart glasses, augmented/virtual reality device, smart watch, charging case, or any other suitable electronic device. As shown in FIG. 2, the UE 30 (also referred to herein as node 30) may include a processor 32, non-removable memory 44, removable memory 46, a speaker/microphone 38, a display, touchpad, and/or user interface(s) 42, a power source 48, a GPS chipset 50, and other peripherals 52. In some exemplary aspects, the display, touchpad, and/or user interface(s) 42 may be referred to herein as display/touchpad/user interface(s) 42. The display/touchpad/user interface(s) 42 may include a user interface capable of presenting one or more content items and/or capturing input of one or more user interactions/actions associated with the user interface. The power source 48 may be capable of receiving electric power for supplying electric power to the UE 30. For example, the power source 48 may include an alternating current to direct current (AC-to-DC) converter allowing the power source 48 to be connected/plugged to an AC electrical receptacle and/or Universal Serial Bus (USB) port for receiving electric power. The UE 30 may also include a camera 54. In an example, the camera 54 may be a smart camera configured to sense images/video appearing within one or more bounding boxes. The UE 30 may also include communication circuitry, such as a transceiver 34 and a transmit/receive element 36. It will be appreciated the UE 30 may include any sub-combination of the foregoing elements while remaining consistent with an example.

The processor 32 may be a special purpose processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, any other type of integrated circuit (IC), a state machine, and the like. In general, the processor 32 may execute computer-executable instructions stored in the memory (e.g., non-removable memory 44 and/or removable memory 46) of the node 30 in order to perform the various required functions of the node. For example, the processor 32 may perform signal coding, data processing, power control, input/output processing, and/or any other functionality that enables the node 30 to operate in a wireless or wired environment. The processor 32 may run application-layer programs (e.g., browsers) and/or radio access-layer (RAN) programs and/or other communications programs. The processor 32 may also perform security operations such as authentication, security key agreement, and/or cryptographic operations, such as at the access-layer and/or application layer for example. The non-removable memory 44 and/or the removable memory 46 may be computer-readable storage mediums. For example, the non-removable memory 44 may include a non-transitory computer-readable storage medium and a transitory computer-readable storage medium.

The processor 32 is coupled to its communication circuitry (e.g., transceiver 34 and transmit/receive element 36). The processor 32, through the execution of computer-executable instructions, may control the communication circuitry in order to cause the node 30 to communicate with other nodes via the network to which it is connected.

The transmit/receive element 36 may be configured to transmit signals to, or receive signals from, other nodes or networking equipment. For example, the transmit/receive element 36 may be an antenna configured to transmit and/or receive radio frequency (RF) signals. The transmit/receive element 36 may support various networks and air interfaces, such as wireless local area network (WLAN), wireless personal area network (WPAN), cellular, and the like. In yet another example, the transmit/receive element 36 may be configured to transmit and/or receive both RF and light signals. It will be appreciated that the transmit/receive element 36 may be configured to transmit and/or receive any combination of wireless or wired signals.

The transceiver 34 may be configured to modulate the signals that are to be transmitted by the transmit/receive element 36 and to demodulate the signals that are received by the transmit/receive element 36. As noted above, the node 30 may have multi-mode capabilities. Thus, the transceiver 34 may include multiple transceivers for enabling the node 30 to communicate via multiple radio access technologies (RATs), such as universal terrestrial radio access (UTRA) and Institute of Electrical and Electronics Engineers (IEEE 802.11), for example.

The processor 32 may access information from, and store data in, any type of suitable memory, such as the non-removable memory 44 and/or the removable memory 46. For example, the processor 32 may store session context in its memory, (e.g., non-removable memory 44 and/or removable memory 46) as described above. The non-removable memory 44 may include RAM, ROM, a hard disk, or any other type of memory storage device. The removable memory 46 may include a subscriber identity module (SIM) card, a memory stick, a secure digital (SD) memory card, and the like. In other examples, the processor 32 may access information from, and store data in, memory that is not physically located on the node 30, such as on a server or a home computer.

The processor 32 may receive power from the power source 48 and may be configured to distribute and/or control the power to the other components in the node 30. The power source 48 may be any suitable device for powering the node 30. For example, the power source 48 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like. The processor 32 may also be coupled to the GPS chipset 50, which may be configured to provide location information (e.g., longitude and latitude) regarding the current location of the node 30. It will be appreciated that the node 30 may acquire location information by way of any suitable location-determination method while remaining consistent with an example.

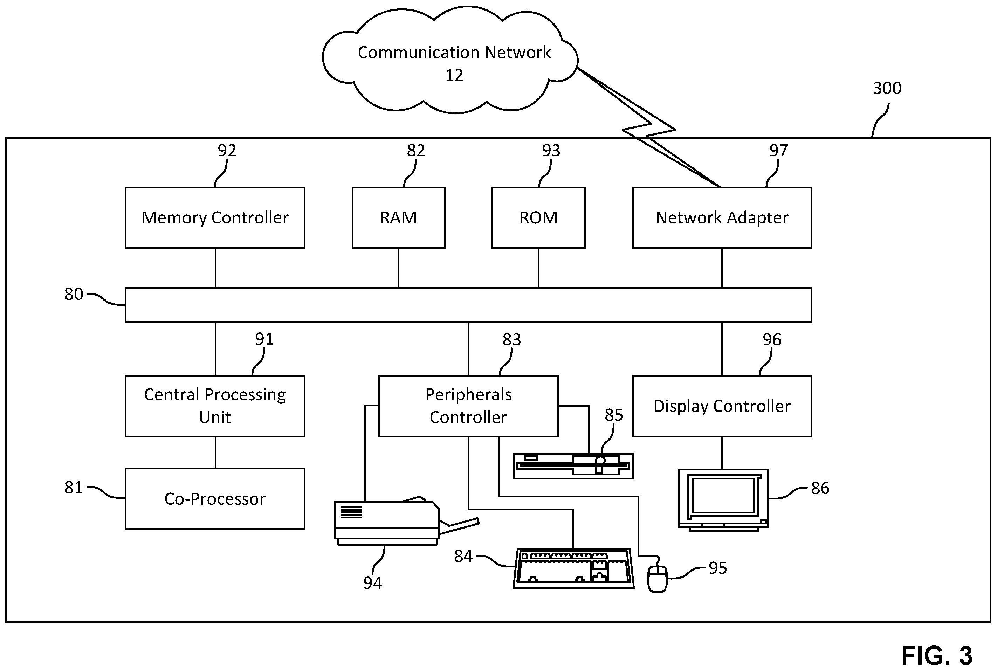

FIG. 3 is a block diagram of an exemplary computing system 300. In some examples, the network device 160 may be a computing system 300. The computing system 300 may comprise a computer or server and may be controlled primarily by computer-readable instructions, which may be in the form of software, wherever, or by whatever means such software is stored or accessed. Such computer-readable instructions may be executed within a processor, such as central processing unit (CPU) 91, to cause computing system 300 to operate. In many workstations, servers, and personal computers, central processing unit 91 may be implemented by a single-chip CPU called a microprocessor. In other machines, the central processing unit 91 may comprise multiple processors. Coprocessor 81 may be an optional processor, distinct from main CPU 91, that performs additional functions or assists CPU 91.

In operation, CPU 91 fetches, decodes, and executes instructions, and transfers information to and from other resources via the computer's main data-transfer path, system bus 80. Such a system bus connects the components in computing system 300 and defines the medium for data exchange. System bus 80 typically includes data lines for sending data, address lines for sending addresses, and control lines for sending interrupts and for operating the system bus. An example of such a system bus 80 is the Peripheral Component Interconnect (PCI) bus.

Memories coupled to system bus 80 include RAM 82 and ROM 93. Such memories may include circuitry that allows information to be stored and retrieved. ROMs 93 generally contain stored data that cannot easily be modified. Data stored in RAM 82 may be read or changed by CPU 91 or other hardware devices. Access to RAM 82 and/or ROM 93 may be controlled by memory controller 92. Memory controller 92 may provide an address translation function that translates virtual addresses into physical addresses as instructions are executed. Memory controller 92 may also provide a memory protection function that isolates processes within the system and isolates system processes from user processes. Thus, a program running in a first mode may access only memory mapped by its own process virtual address space; it cannot access memory within another process's virtual address space unless memory sharing between the processes has been set up.

In addition, computing system 300 may contain peripherals controller 83 responsible for communicating instructions from CPU 91 to peripherals, such as printer 94, keyboard 84, mouse 95, and disk drive 85.

Display 86, which is controlled by display controller 96, may be used to display visual output generated by computing system 300. Such visual output may include text, graphics, animated graphics, and video. The display 86 may also include or be associated with a user interface. The user interface may be capable of presenting one or more content items and/or capturing input of one or more user interactions associated with the user interface. Display 86 may be implemented with a cathode-ray tube (CRT)-based video display, a liquid-crystal display (LCD)-based flat-panel display, gas plasma-based flat-panel display, or a touch-panel. Display controller 96 includes electronic components required to generate a video signal that is sent to display 86.

Further, computing system 300 may contain communication circuitry, such as for example a network adapter 97, that may be used to connect computing system 300 to an external communications network, such as network 12 of FIG. 2, to enable the computing system 300 to communicate with other nodes (e.g., UE 30) of the network.

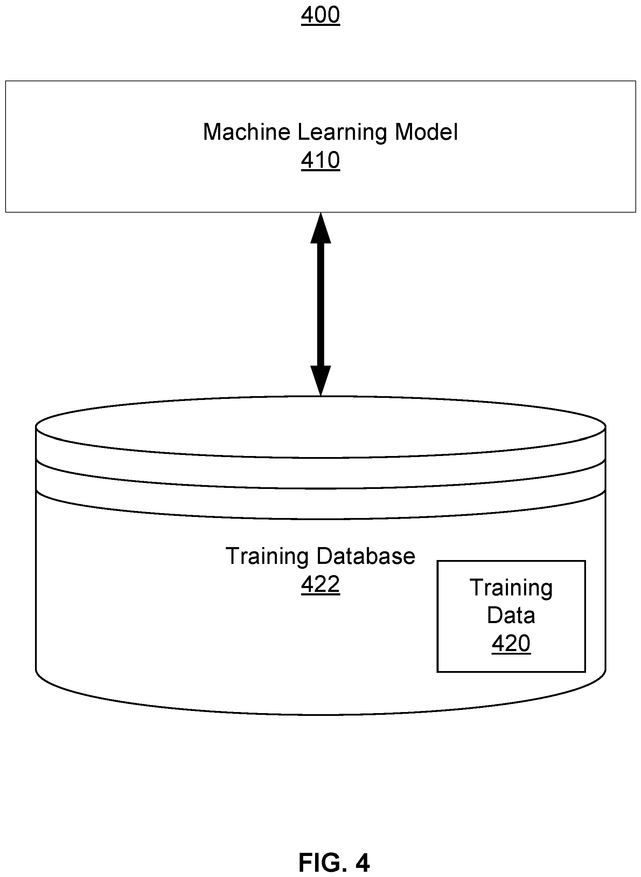

FIG. 4 illustrates a machine learning and training model, in accordance with an example of the present disclosure. The machine learning framework 400 associated with the machine learning model may be hosted remotely. Alternatively, the machine learning framework 400 may reside within a server 162 shown in FIG. 1, or be processed by an electronic device (e.g., head mounted displays, smartphones, tablets, smartwatches, or any electronic device, such as communication device 105). The machine learning model 410 may be communicatively coupled to the stored training data 420 in a memory or database (e.g., ROM, RAM) such as training database 422. In some examples, the machine learning model 410 may be associated with operations of any one or more of the systems/architectures depicted in subsequent figures of the application. In some other examples, the machine learning model 410 may be associated with other operations. The machine learning model 410 may be implemented by one or more machine learning models(s) and/or another device (e.g., a server and/or a computing system). In some examples, the machine learning model 410 may be a student model trained by a teacher model, and the teacher model may be included in the training database 422.

According to an aspect of the subject technology described, novel approaches to improve directives and control text-to-image modifications are described in this application.

Generally, a diffusion model may be a type of generative Al model that progressively converts random noise into a structured output, such as an image or audio clip, through a series of learned steps. The architecture of a diffusion model may be centered around a deep neural network, which may use convolutional layers when dealing with images, or recurrent layers for sequence data like audio or text. The operation of the model may include two primary phases: the forward diffusion process and the reverse generative process. In the forward diffusion, the model may gradually add noise (e.g., Gaussian noise) to the data over a series of timesteps, transforming the original data into pure noise. This is done in a way that each step of adding noise is statistically tractable, allowing the model to learn how the data is being corrupted at each timestep.

Diffusion models may be generated based on the concept of knowledge distillation, where the goal is to transfer knowledge from a complex model (teacher) to a simpler model (student). Training a student diffusion model through the process of distillation begins with the generation or accessing of a well-trained, high-performance teacher model. The teacher model may have already learned how to effectively perform the task at hand, such as image generation, through a series of forward (e.g., adding noise) and reverse (e.g., removing noise) diffusion steps, as described above. In some examples, the teacher model may be a pre-trained model.

According to an example, a method for modifying images using machine learning and latent diffusion models is described. More specifically, the application provides a user-friendly interface for receiving a reference image and an input containing text associated with the reference image. The user interface of the service is intuitive and easy to use, allowing users to modify images quickly and efficiently.

The method may be particularly useful for modifying images employed in marketing and advertising campaigns. The ability to modify the background, a particular area of the image, or style of an image may help create more visually appealing and effective marketing materials. The method may also be used in a variety of other contexts, such as graphic design, web development, and social media marketing. The ability to quickly and easily modify images may be a valuable tool for professionals in these fields.

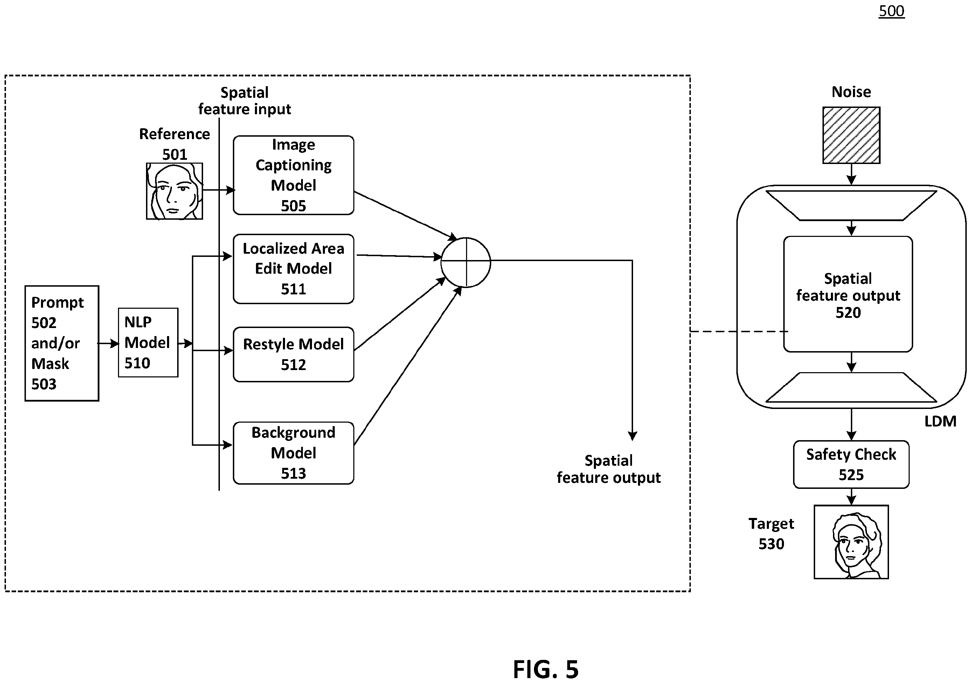

According to an example of this aspect, FIG. 5 illustrates an example system architecture 500 for generating a modified image. The modified image may be produced via one or more inputs including a reference image, a textual prompt, and a mask of an area or location within the reference image.

In an example of the aspect as depicted in FIG. 5, a reference image 501 may be received via the user interface of a service 500, e.g., an app. An image captioning model 505 may be employed to digest the reference image 501 and understand its relevant features. The trained model employed in the architecture may be capable of identifying and analyzing various features of the reference image. These features of a reference image may include for example color, texture, shape, and other visual characteristics. In another example, a reference image may include an object, such as for example an ice cream cone. In yet another example, the reference image may include one or more people. According to an example, it is envisaged that features associated with an identity of a person digested by the trained model are preserved in the modified image.

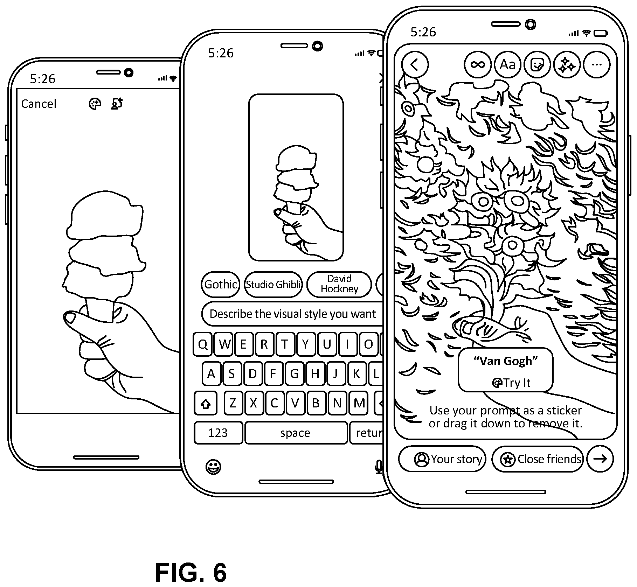

According to an example, the service may transmit a suggestion to a user via the user interface. The suggestion may provide an ability to edit a local area of the reference image (e.g., foreground), via local editing, restyle the entire reference image, or modify a background of the reference image. In the case of local editing for example, the suggestion from the service may include a mask or designation of a particular area (e.g., bounding box) in the image with an option to be modified based upon feedback from a user. An indication of feedback may be received via the user interface. The indication of feedback from the user may include, such as for example, a tap of an area of the reference image causing a mask or designation to appear on the tapped area. The indication may also include a verbal (e.g., talk-to-type) or keyboard initiated prompt. The feedback may add or replace an object or move an object within a foreground of the reference image. For example, if a reference image includes an ice cream cone held by a hand (e.g., FIG. 6), and the user provides feedback - either text based or mask based - to replace the ice cream cone with a flower, the service may process the request and apply a directed change to the selected area of the reference and output a modified image.

As introduced above, the suggestion may include a query directed to modifying a background or restyling the reference image. As understood in the application, the background may include everything in an image except for the foreground including a subject. Separately, a restyle may include a global change to pixels of an image. For example, restyle may include but is not limited to aesthetic themes such as warm, natural, minimalist, candid and cinematic perspectives. Restyle may also include changing a modern image to an image exhibiting rustic features.

In further reference to FIG. 5, a prompt/text 502 and/or mask 503 may be received via the user interface of the service. The prompt/text 502 is generally associated with the reference image. This input may provide additional information that may be used to modify the reference image.

In one example, a natural language processing model (NLP) 510 may assess the context of the prompt 502 and/or mask 503. In other words, whether the context impacts a local area edit of the reference image, a restyle of the reference image, or a background of the reference image. Based on the assessment, the NLP 510 may transmit the prompt 502 and/or mask 503 to one or more LDMs, including for example, a local edit model 511, a restyle ML model 512, or a background ML model 513. In an example, it is envisaged that the one or more models may be fine-tuned one or more times with selected public image generation data. In so doing, a lifelike output of the modified image may be obtained.

Next, the reference image 501 may be modified by one or more of a local edit model 511, a restyle model 512 or a background model 513. The LDMs used in the method are trained to modify images based on the features identified by the machine learning model. These models may modify the background, area, or style of the reference image to create a modified image that better suits the user's needs.

In an example, one or more of the models may zoom into an area of the reference image being preserved, such as for example a face of a person or an area where a new object is to be added via a local edit. A change may be applied to the specific area. Doing so preserves high image resolution of the area. The edited area of the image may be pasted back into the image.

According to another example, the criteria for zoom-in editing may include the resolution of the full image being more than two times what the model may handle. Another criteria may include size of the area that needs to be edited. For example, if the subject is less than 5% of the image, it is envisaged that the zoom-in edit may be needed. In so doing, full image quality may be preserved.

As further illustrated in FIG. 5, a spatial feature output 520 representative of a modified image 530, e.g., target, may be obtained by the service. In an example, a modified output image 530 may be transmitted via the user interface to a user.

Alternatively, prior to the transmitting the modified image 530 over the user interface, the service may wait before transmitting the modified image. That is, a safety check is performed on spatial feature output 520 via a safety check model 525. The safety check model 525 may assess whether the output image is safe to transmit via the user interface to the user and/or public in view of predetermined criteria. The predetermined criteria may include any one or more of a degree of violence, profanity, nudity or the like which may impact privacy, ethical or legal laws or regulations. Put another way, the safety check model 525 ensures that privacy, ethical and legal considerations based upon predetermined criteria are met before transmitting the reference image 530. The safety check model may continuously be updated in view of relevant updates to laws or regulations.

According to a further example, if the predetermined criteria is not met, the service transmits a request via the user interface for a user to modify the reference image and/or prompt. The user is then prompted to provide a new image or new input include a prompt via the user interface. In so doing, the entire process described above is rerun before outputting a modified image on the user interface.

According to yet even another example, a user may refine an area of the reference image. For example, the user may tap on an area or input a mask in an area of the reference image and a comment such as, "change color to blue." The user may also provide a textual prompt such as, "add a flower to the man's hand." The mask may include a hollow or filled box or any shape around an area, object or person in the reference image. If the prompt provided by the user via the user interface is to perform a local edit of a foreground of the image, the trained local editing model will ensure the foreground is semantically fitted within the new background and output a smooth and harmonized modified image. It is envisaged the service may output one or more options, where the user may input more modification to the local area, style or background as needed. In some examples, users may have the option to provide feedback on whether they were satisfied with the generation or not to help the learning rate of one or more models of the service.

According to a further example of this aspect, a user may restyle any image with any visual aesthetic based upon text input via the user interface. According to the application, a restyle involves a modification to all pixels of the image. In another example, again regarding an image of an ice cream cone held by a hand, the user may input a prompt or alternatively be provided suggestions via the service. One prompt may include restyling the image. As shown in FIG. 6, a reference image of a hand holding an ice cream cone may be restyled in view of a user-approved phrase, such as for example, "Van Gogh." In other words, an image may be reimagined with any visual style by way of a description. A trained model of the service may take the received image and search a database for the prompt "Van Gogh" as shown in the middle user interface. As further shown in FIG. 6, the reference image is restyled in the fashion of Van Gogh and a modified image on the user interface (on the right) displays a hand holding flowers.

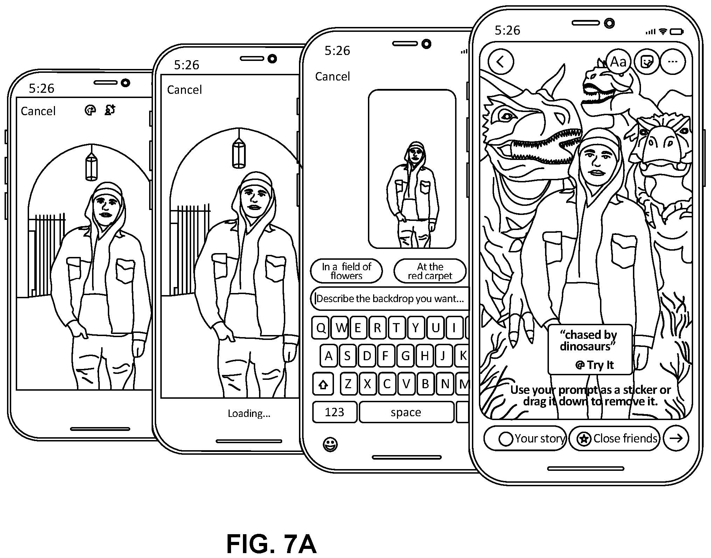

According to yet another example, a user may select a photo of themself in an environment. The environment may be their garage or somewhere outdoors for example. The user may provide a prompt or approve a suggestion provided by the service over the user interface. The prompt may involve modifying a background of the image. A backdrop of the image may be turned into any imaginable scene via a prompt. As shown in FIG. 7A, the prompt may be, "chased by dinosaurs." The trained model for background modifications may search a database in view of the provided prompt and apply the modification while preserving the person.

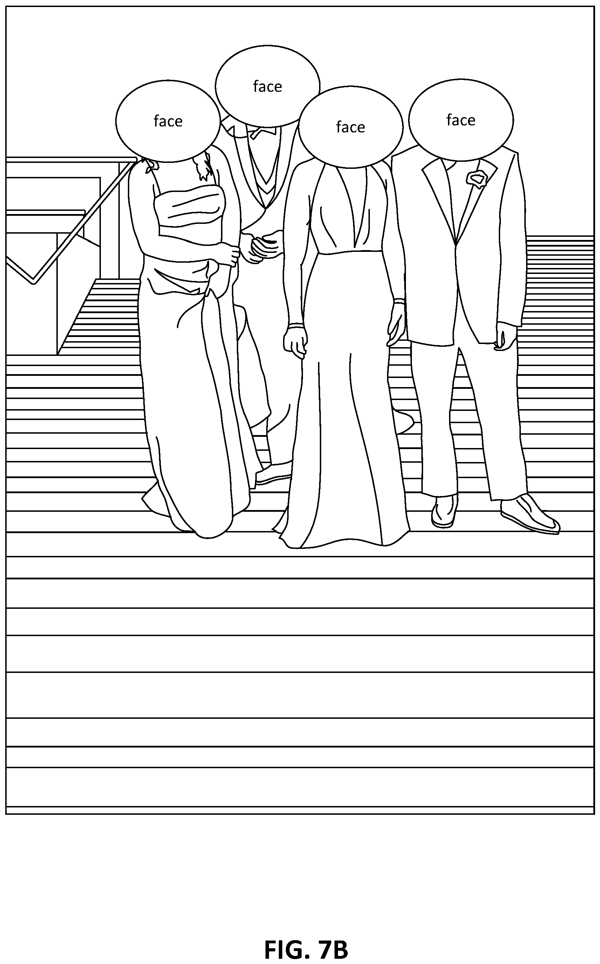

As shown in FIG. 7B the received prompt may say, "appear on the red carpet of the Oscar's." The trained model may search a database and apply the modification to the reference image (e.g., a group of individuals in a garage). Here, it is envisaged that one or more of a local edit, restyle or background modification may be performed in combination. As further depicted in FIG. 7B, a local edit may involve replacing an individual's casual attire with formal attire including tuxedos and gowns.

According to another example of the application, a method is described for modifying a reference image based on input received via a user interface of a service. The reference image may contain an object or a person. One or more features of the image may be determined using a trained ML model.

The image may subsequently be modified using one or more trained LDMs based on the determined features and the received input. The modification of the image may include changes to one or more of the background, local area, or style of the image. The modified image may be displayed via the user interface of the service.

In some examples, an input may include a mask or bounding box of an area in the reference image. Prior to receiving the input via the user interface, the service may transmit a suggestion of a mask or bounding box of a particular area in the image to modify. In addition or alternatively, a suggestion may be provided by the service affecting the background or style of the reference image. It is envisaged in the application that the identity of the object or person in the reference image is preserved during the modification process.

According to an example, the service may be configured to preserve image quality. For instance, if the resolution of the reference image exceeds the capacity of the LDMs, the service may determine a section of the image to be preserved. The service may subsequently edit a zoomed-in section of the image before pasting it into the reference image. As a result, quality of the output image is preserved.

According to a further example of the method, an assessment may be made whether one or more of the reference image, received input, or modified image meets predetermined criteria. The predetermined criteria may include for example violence, profanity, or nudity. The assessment may be performed via a privacy LDM or the like. Based on the assessment, a request may be transmitted via the user interface to a user to update the reference image or received input. Subsequently an updated reference image or input may be received via the user interface by a user for further processing in accordance with the protocols discussed above.

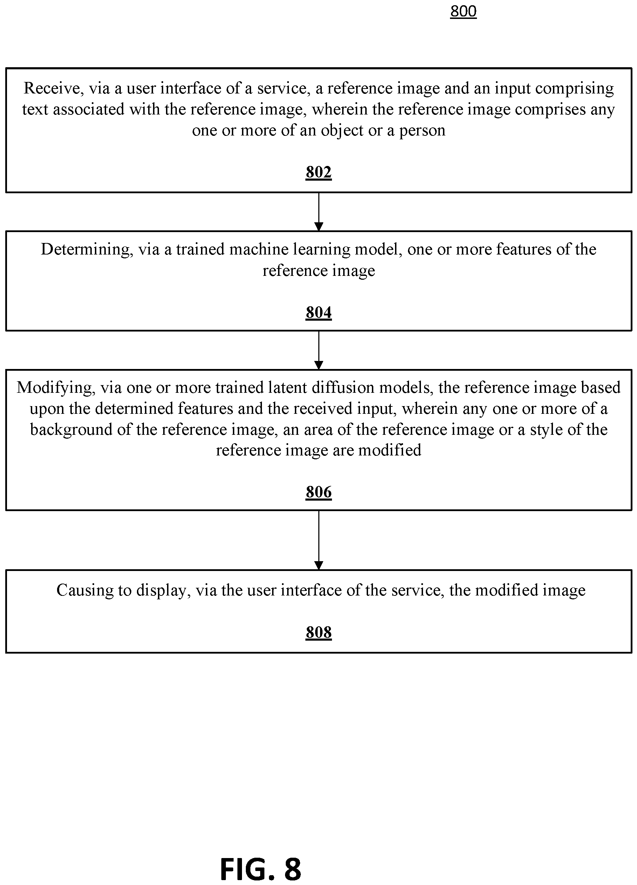

According to yet a further example, FIG. 8 illustrates a flowchart of an example process of the subject application. In some implementations, one or more process blocks in FIG. 8 may be performed by a device. As shown in FIG. 8, process 800 may include a step 802 directed to receiving, via an user interface of a service, a reference image and an input having text associated with the reference image. The reference image may comprise any one or more of an object or a person. Process 800 may also include step 804 directed to determining, via a trained ML model, one or more features of the reference image. Process 800 may further include step 806 directed to modifying, via one or more trained LDMs, the reference image based upon the determined features and the received input. Any one or more of a background of the reference image, an area of the reference image or a style of the reference image may be modified. Process 800 may even further include step 808 directed to causing to display, via the user interface of the service, the modified image. Although FIG. 8 shows example blocks of process 800, in some implementations, process 800 may include additional blocks, fewer blocks, different blocks, or differently arranged blocks than those depicted in FIG. 8. Additionally, or alternatively, two or more of the blocks of process 800 may be performed in parallel.

The foregoing description of the examples has been presented for the purpose of illustration; it is not intended to be exhaustive or to limit the patent rights to the precise forms disclosed. Persons skilled in the relevant art can appreciate that many modifications and variations are possible in light of the above disclosure.

Some portions of this description describe the examples in terms of applications and symbolic representations of operations on information. These application descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as components, without loss of generality. The described operations and their associated components may be embodied in software, firmware, hardware, or any combinations thereof.

Any of the steps, operations, or processes described herein may be performed or implemented with one or more hardware or software components, alone or in combination with other devices. In one example, a software component is implemented with a computer program product comprising a computer-readable medium containing computer program code, which can be executed by a computer processor for performing any or all of the steps, operations, or processes described.

Examples also may relate to an apparatus for performing the operations herein. This apparatus may be specially constructed for the required purposes, and/or it may comprise a computing device selectively activated or reconfigured by a computer program stored in the computer. Such a computer program may be stored in a non-transitory, tangible computer-readable storage medium, or any type of media suitable for storing electronic instructions, which may be coupled to a computer system bus. Furthermore, any computing systems referred to in the specification may include a single processor or may be architectures employing multiple processor designs for increased computing capability.

Examples also may relate to a product that is produced by a computing process described herein. Such a product may comprise information resulting from a computing process, where the information is stored on a non-transitory, tangible computer-readable storage medium and may include any example of a computer program product or other data combination described herein.

Finally, the language used in the specification has been principally selected for readability and instructional purposes, and it may not have been selected to delineate or circumscribe the inventive subject matter. It is therefore intended that the scope of the patent rights be limited not by this detailed description, but rather by any claims that issue on an application based hereon. Accordingly, the disclosure of the examples is intended to be illustrative, but not limiting, of the scope of the patent rights, which is set forth in the following claims.

## Claims

1. A method comprising:
receiving, via a user interface of a service, a reference image and an input comprising text associated with the reference image, wherein the reference image comprises any one or more of an object or a person;
determining, via a trained machine learning (ML) model, one or more features of the reference image;
modifying, via one or more trained latent diffusion models (LDMs), the reference image based upon the determined features and the received input, wherein any one or more of a background of the reference image, an area of the reference image or a style of the reference image are modified; and
causing to display, via the user interface of the service, the modified image.

2. The method of claim 1, wherein the input comprises a mask of an area in the image.

3. The method of claim 1 or 2, further comprising:
transmitting prior to receiving the input, via the user interface, any one or more of a suggestion of a mask of the area in the image or a suggestion affecting the background or the style of the reference image.

4. The method of any preceding claim, wherein an identity of the object or the person is preserved.

5. The method of any preceding claim, further comprising:
detecting whether a resolution of the reference image exceeds a capacity of the LDMs;
determining a section of the reference image being preserved; and
editing a zoomed-in section of the reference image being preserved and pasting the edited section into the reference image.

6. The method of any preceding claim, further comprising:
assessing, via a privacy LDM, whether any one or more of the reference image, received input or the modified image meets predetermined criteria prior to the reference image being displayed on the user interface of the service.

7. The method of claim 6, wherein the predetermined criteria comprises any one or more of violence, profanity or nudity.

8. The method of claim 6 or 7, further comprising:
transmitting, via the user interface based upon the assessment, a request to update any one or more of the reference image or the received input; and
receiving, via the user interface, any one or more of an updated reference image or an updated input.

9. A system comprising:
a memory with instructions stored thereon; and
a processor operably coupled to the memory and configured to execute the method of any preceding claim.

10. A computer readable medium comprising program instructions stored thereon which, when executed by a processor, cause the processor to carry out the method of any of claims 1 to 8.

11. A computer program product comprising instructions which, when the program is executed by a computer, cause the computer to carry out the method of any of claims 1 to 8.
